Europäisches Patentamt

(19) European Patent Office

Office européen des brevets

(11) EP 0 917 223 A1

(12) EUROPEAN PATENT APPLICATION
published in accordance with Art. 158(3) EPC

(43) Date of publication:
19.05.1999 Bulletin 1999/20

(51) Int. Cl.$^6$: **H01M 4/58**, H01M 4/02,
H01M 10/40, C01B 31/04

(21) Application number: 98901105.1

(22) Date of filing: 03.02.1998

(86) International application number:
PCT/JP98/00442

(87) International publication number:
WO 98/34291 (06.08.1998 Gazette 1998/31)

(84) Designated Contracting States:
CH DE FR GB LI

(30) Priority: 04.02.1997 JP 21443/97
04.02.1997 JP 21444/97
08.07.1997 JP 182117/97

(71) Applicant:
MITSUBISHI CHEMICAL CORPORATION
Chiyoda-ku, Tokyo 100-0005 (JP)

(72) Inventors:
• SATO, Hideharu,
Mitsubishi Chemical Corporation
Inashiki-gun, Ibaraki 300-0332 (JP)
• YAMAGUCHI, Shouji,
Mitsubishi Chemical Corporation
Inashiki-gun, Ibaraki 300-0332 (JP)

• HAYASHI, Manabu,
Mitsubishi Chemical Corporation
Inashiki-gun, Ibaraki 300-0332 (JP)
• NISHIOKA, Keiko,
Mitsubishi Chemical Corporation
Inashiki-gun, Ibaraki 300-0332 (JP)
• FUJII, Hiromi,
Mitsubishi Chemical Corporation
Inashiki-gun, Ibaraki 300-0332 (JP)
• SATO, Nariaki,
Mitsubishi Chemical Corporation
Inashiki-gun, Ibaraki 300-0332 (JP)

(74) Representative: HOFFMANN - EITLE
Patent- und Rechtsanwälte
Arabellastrasse 4
81925 München (DE)

(54) **LITHIUM ION SECONDARY BATTERY**

(57)    A lithium ion secondary battery comprising a positive electrode, a non-aqueous electrolyte, a separator and a negative electrode comprising a carbon material capable of charging and discharging lithium ions, said negative electrode containing at least one type of graphite material which satisfies the following conditions (a) and (b): (a) a graphite material falling within a defined region in the relation between its particle size and specific surface area; (b) in Raman spectroscopic analysis, the ratio of the strength of the peak existing in the region of 1,350-1,370 cm$^{-1}$(IB) to the strength of the peak existing in the region of 1,570-1,620 cm$^{-1}$ (IA), which is represented by an R value (IB/IA), is 0.001 to 0.2.

This battery has high capacity and is also excellent in rapid charge/discharge characteristics, flatness of charge/discharge potential and cycle performance.

EP 0 917 223 A1

## Description

<u>TECHNICAL FIELD</u>

The present invention relates to a lithium ion secondary battery. More particularly, it relates to a lithium ion secondary battery which has a high capacity, rapid charge and discharge characteristics, a high flatness of charge and discharge potential, and an excellent cycle performance.

<u>BACKGROUND ART</u>

With a recent tendency toward smaller size of electronic devices, necessity is rising for the enhancement of capacity of secondary batteries used for such electronic devices. Accordingly, attention has been focused on lithium ion secondary batteries having higher energy density than the conventional nickel/cadmium batteries or nickel/hydrogen batteries. It was initially tried to use lithium metal as negative electrode material of such batteries.

However, in case of lithium ion secondary batteries, it was found that dendrite-like lithium separates out in repetition of charge and discharge and passes through the separator to reach the positive electrode, causing a risk of short circuiting and consequent firing of the battery. Therefore, attention has been focused on lithium battery in which shifting of the non-aqueous solvent in the process of charge and discharge takes place between the layers, and carbonaceous materials capable of preventing separation of lithium metal are used as negative electrode material.

In Japanese Patent Application Laid-Open (KOKAI) No. 57-208079, there is proposed the use of graphite as the said carbonaceous material. When graphite having high crystallinity is used as negative carbon electrode material of a lithium ion secondary battery, there can be obtained a battery capacity close to 372 mAh/g which is closed to the theoretical capacity of lithium occlusion of graphite. However, since graphite is active to the electrolyte, there is generally observed an irreversible capacity of not less than several ten mAh/g due to layer formation or side reactions in the initial cycle of charge and discharge.

X-ray diffractometry has been used for determining crystallinity of graphite. This method is suited for observing the difference in properties of the carbonaceous materials due, for one thing, to different calcination temperatures, but inadequate for determining the difference between the carbonaceous materials, especially for classifying the high-crystallinity graphite materials. For instance, the parameter (d002) of the carbon layer interplanar spacing that can be determined by X-ray diffractometry is limited to the range of 3.357 to 3.360 Å for the high-crystallinity graphite materials, which represents no significant difference between such materials. Also, "La" which indicates the crystallite size in the basal direction of carbon and "Lc" indicating the crystallite size in the laminating direction of carbon, that can be determined by X-ray diffractometry, are outside the limits of determination for high-crystallinity graphite, so that it is impossible with this method to make a correct comparison of the materials.

On the other hand, the capacity of low-temperature calcined amorphous carbon, which is more than the theoretical capacity of graphite, can be increased up to about 500 mAh/g by proper setting of cut-off potential. In this case, however, because of excessively high potential at the time of undoping of lithium ions as compared with that of graphite, and also because of a large hysteresis in potential characteristics between charge and discharge, it is quite difficult to produce a potential difference from the positive electrode, making it unable to obtain a large-capacity and high-powder battery. A large loss of capacity that occurs in the initial cycle of charge and discharge is also a baffling problem, and further, it is known that a sharp drop of capacity takes place on rapid charging.

$LiNiO_2$ is a hopeful candidate for positive electrode material of lithium ion secondary batteries because this material is more excellent than $LiCoO_2$, which has hitherto been popularly used as positive electrode active material, in capacity and cost as well as in the aspect of reserves of its raw material, but this material involves the problem that as it is lower in potential against $Li/Li^+$ than $LiCoO_2$, it is difficult to produce a potential difference from the negative electrode.

It is, therefore, considered that in order to make the best use of the advantages of $LiNiO_2$, development of a negative electrode material capable of providing a high capacity at a potential close to 0 V against $Li/Li^+$ is essential.

In certain uses of lithium ion secondary batteries, for example, in use thereof for the electric automobiles, it is likely that there arises an occasion where quick recharging is required. In such uses, an electrode material with excellent rate characteristics is needed.

The present invention has been made in consideration of the above circumstances, and it is an object to provide a lithium ion secondary battery which has a high capacity, rapid charge and discharge characteristics, a high flatness of charge and discharge potential, and a good cycle performance.

<u>DISCLOSURE OF INVENTION</u>

As a result of the present inventors' earnest studies, it has been found that a negative electrode capacity and a rate characteristics against high-speed charge and discharge can be estimated from the results of determination of a particle size of the graphite used as a negative electrode material, a BET specific surface area and Raman parameters by Raman spectroscopic analysis thereof, before actually applying various types of graphite material as a negative electrode for a lithium ion secondary battery and determining various electrochemical properties such as electrode capacity.

The present inventors also have found that among many powdery graphite materials, those having excellent rate characteristics against a negative electrode capacity and a high-speed charge and discharge are limited to the materials whose numerical values of the above determinations fall within a certain specified range, and the said materials are either (a) high-crystallinity natural or artificial graphite or (b) natural, artificial or expanded graphite subjected to re-heat treatment at a temperature of not lower than 2,000°C.

The present inventors have further found that when the surface of a graphitic carbonaceous material is coated with a carbonizable organic material, then calcined, pulverized and treated with an acid or alkaline solution, it is possible to provide a higher capacity than before treatment, and as compared with the case where amorphous carbon is used, the potential at the time of lithium doping or undoping remains close to the potential of Li/Li$^+$ like graphite. Moreover, the said carbonaceous material has no potential hysteresis due to charge and discharge, and it is easy to produce a potential difference from the positive electrode, so that a high working efficiency can be realized from the first cycle of charge and discharge. Further, the said treated carbonaceous material is improved in rate characteristics.

The present invention has been attained on the basis of the above findings, and its essential aspect comprises the following embodiments:

(1) A lithium ion secondary battery comprising a positive electrode, a non-aqueous electrolyte, a separator and a negative electrode comprising a carbonaceous material capable of charging and discharging lithium ions, the said negative electrode containing at least one type of graphite material which satisfies the conditions specified in the following (a) and (b):

(a) when the BET specific surface area of the graphite material is represented by "y" (m$^2$/g) and the particle size by "x" ($\mu$m), the material falls within the region defined by the following formula (I):

$$y \leqq 52x^{-0.6} \quad (4 \leqq x \leqq 40, \ 0.1 \leqq y \leqq 25) \tag{I}$$

(b) In Raman spectroscopic analysis using argon ion laser light with a wavelength of 5,145 Å, the ratio of the strength of the peak existing in the region of 1,350-1,370 cm$^{-1}$ (IB) to the strength of the peak existing in the region of 1,570-1,620 cm$^{-1}$ (IA), which is represented by an R value (IB/IA), falls in the range of 0.001 to 0.2.

(2) A lithium ion secondary battery characterized by using as negative electrode, an "amorphous carbon-coated graphitic carbonaceous material" prepared by coating the particle surfaces of the graphite material described in (1) above with a carbonizable organic material, and calcining and pulverizing the coated material.

(3) A lithium ion secondary battery characterized by using as negative electrode a graphite material prepared by coating the surfaces of a graphite material with a carbonizable organic material, calcining and pulverizing the coated material, and then treating it with an acid or alkaline solution.

(4) A lithium ion secondary battery characterized by using as negative electrode a graphite material prepared by coating the surfaces of the graphite material as defined in (1) above with a carbonizable organic material, calcining and pulverizing the coated material, and then treating it with an acid or alkaline solution.

The present invention is describe in detail below.

First, the materials used in the present invention are explained.

A. Graphite material

The graphite powder used in the present invention is preferably selected from (1) high-crystallinity natural or artificial graphite, (2) natural, artificial or expanded graphite subjected to re-heat treatment at not lower than 2,000°C and (3) highly purified products of these graphite materials, as far as their properties are known.

In case of using graphitized materials having same qualities as (1) or (2), obtained by graphitizing the graphitizable materials, the following graphitizable materials can be cited: (4) graphitized materials obtained by calcining at 2,500-3,200°C one or more of the organic materials selected from the group consisting of coal tar pitch, coal heavy oil, normal pressure residual oil, petroleum heavy oil, aromatic hydrocarbons, nitrogen-containing cyclic compounds, sulfur-containing cyclic compounds, polyphenylene, polyvinyl chloride, polyvinyl alcohol, polyacrylonitrile, polyvinyl butyral, natural polymers, polyphenylene sulfide, polyphenylene oxide, furfuryl alcohol resins, phenol-formaldehyde resins and imide resins, (5) graphitized materials obtained by calcining the graphitizable materials such as shown in the above (4) usually at 400-2,500°C, preferably at 1,000-2,000°C, in the presence of a catalyst such as powder or thin film of at least one material selected from the group consisting of lithium, beryllium, boron, magnesium, aluminum, silicon, potassium, calcium, titanium, vanadium, chromium, manganese, copper, zinc, nickel, platinum, palladium, cobalt, ruthenium, tin, lead, iron, germanium, zirconium, molybdenum, silver, barium, tantalum, tungsten and rhenium.

The graphite materials which are unable to satisfy the said conditions of (a) and (b) specified in the present invention can also be used if they are subjected to re-calcination treatment at 2,000-3,200°C so that they meet the conditions of (a) and (b).

B. Determination of graphite material

(i) First, the particle size is measured. Any preferable method such as a laser diffractometry method, an electric resistance method or a direct particle size determination method comprising processing of a CCD high-sensitivity camera photographic image, can be used for measurement of the particle size. Graphite powder having an average particle diameter of 4-40 $\mu$m is selected.

(ii) Then the specific surface area is measured. The BET method by a gaseous molecular adsorption, an organic molecular adsorption method, an organic solvent adsorption method, etc., can be used for measuring the specific surface area. The graphite powders having a particle size in the above-defined range are further screened to select those whose BET specific surface area falls within the range of 0.1-25 $m^2$/g.

(iii) These graphite powders are additionally screened to obtain the particles satisfying the above-shown formula (I) defining the relation between the BET specific surface area ($m^2$/g) and a particle size ($\mu$m). Particularly the graphite material satisfying the following formula (II), or the graphite material having an average particle size of 4-30 $\mu$m and a BET specific surface area of 0.1-20 $m^2$/g, is preferred:

$$y \leqq 52x^{-0.6} \quad (4 \leqq x \leqq 30, 0.1 \leqq y \leqq 20) \tag{II}$$

(iv) Next, the graphite material satisfying the above relation between an average particle size and a specific surface area is subjected to Raman spectroscopic analysis using 5,145 Å argon ion laser light to select the material whose R value (IB/IA) (IA: strength of the peak existing at 1,570-1,620 $cm^{-1}$; IB: strength of the peak existing at 1,350-1,370 $cm^{-1}$) falls within the range of 0.001 to 0.2. It is preferred to select a material whose $\Delta \upsilon$ value, or half-value width of the peak existing at 1,570-1,620 $cm^{-1}$, is in the range of 14 to 22 $cm^{-1}$.

The R value is preferably in the range of 0.001 to 0.15, more preferably 0.001 to 0.07.

In the graphite material used in the present invention, the interplanar distance (d002) of the (002) face in X-ray diffraction is preferably not more than 3.38 Å, more preferably not more than 3.36 Å, and the crystallite size (Lc) in the direction of the c-axis is preferably not more than 1,000 Å.

Japanese Patent Application Laid-Open (KOKAI) No. 7-235294 notes that there is a problem of vigorous generation of gases when a graphite material with the R value of not more than 0.20 is used.

According to the present invention, however, the possibility of such generation of gases can be eliminated by using a graphite material satisfying the above-defined conditions relating to the average particle size and the specific surface area, and further, the properly selection of the electrolyte and the good design of the battery structure makes it possible to obtain a battery having no such problem in practical use.

Even better result can be obtained when using an "amorphous carbon-coated graphitic carbonaceous material" obtained by coating the said graphite material with a carbonizable organic material, calcining, carbonizing and pulverizing the coated graphite material.

C. "Amorphous carbon-coated graphitic carbonaceous material"

The "amorphous carbon-coated graphitic carbonaceous material" according to the present invention is a material obtained by coating a base graphite material with a carbonizable organic material, carbonizing the coated material by calcination, and pulverizing the calcined material. This material has the property of occluding and releasing lithium ions. More specifically, this powdery carbonaceous material is characterized by the facts that the interplanar spacing (d002) of the carbon crystal is in the range of 3.35 to 3.39 Å, and that the R value of more than that of the base graphite material, preferably falls within the range of 0.15 to 1.0, more preferably 0.2 to 0.5.

The above-defined material can be easily obtained by using, for example, the following base materials.

D. Base graphite materials usable for preparing "amorphous carbon-coated graphitic carbonaceous material"

The base graphite material used in the present invention may take optional shapes such as globular, plate, fibrous, etc, and it has preferably such a shape that the average particle size thereof is smaller than that of the "amorphous carbon-coated graphitic carbonaceous material" after pulverization. Especially preferably, the material has such a shape that its average particle size or average major diameter is in the range of 20 to 99% of the average particle size of the "amorphous carbon-coated graphitic carbonaceous material."

Preferred examples of such base graphite material are graphitized products of conductive carbon black such as acetylene black and Ketchen black, powder of artificial or natural graphite and its purified products, and carbon fiber such as vapor phase-grown carbon fiber. Especially, a material which satisfies the above-defined conditions on relation between the particle size and the specific surface area, the Raman R value and the half-value width, is preferred.

E. Organic material for preparing "amorphous carbon-coated graphitic carbonaceous material"

(i) The organic materials which can be carbonized in liquid phase include coal heavy oils such as various types of coal tar pitch ranging from soft pitch to hard pitch and dry-distillation liquefied oil, and petroleum heavy oils, for example, straight run heavy oils such as normal pressure residual oil and reduced pressure residual oil, and cracked heavy oils such as ethylene tar which is formed as a by-product in cracking of crude oil or naphtha. The said organic materials also include aromatic hydrocarbons such as acenaphthylene, decacyclene and anthracene, nitrogen-containing cyclic compounds such as phenazine and acridine, sulfur-containing cyclic compounds such as thiophene, alicyclic compounds such as adamantane (these compounds need to be pressed to not less than 30 MPa), and polymers such as polyphenylenes (biphenyl, terphenyl, etc.), polyvinyl chloride and polyvinyl alcohol.

(ii) The organic materials which can be carbonized in solid phase, include natural polymers such as cellulose and saccharides, thermoplastic resins such as polyphenylene sulfide and polyphenylene oxide, and thermocuring resins such as furfuryl alcohol resin, phenol-formaldehyde resin and imide resin.

F. Preparation of "amorphous carbon-coated graphitic carbonaceous material"

An "amorphous carbon-coated graphitic carbonaceous material" can be obtained by mixing a lead material and an organic material such as mentioned above, calcining the mixture usually at 400-2,800°C, preferably at 700-1,500°C, and pulverizing the calcined material. The average particle size of the "amorphous carbon-coated graphitic carbonaceous material" is usually in the range of 4 to 100 $\mu$m, preferably 5 to 50 $\mu$m.

The graphite content in the finally prepared "amorphous carbon-coated graphitic carbonaceous material" is usually in the range of 50 to 99% by weight, preferably 75 to 99% by weight, more preferably 90 to 99% by weight, and the content of the calcined organic material is usually in the range of 1 to 50% by weight, preferably 1 to 25% by weight, more preferably 1 to 10% by weight.

As for the properties of the said graphite particles, it is preferable that the interplanar spacing (d002) of the (002) face in X-ray diffraction is in the range of 3.36 to 3.39 Å, the said R value is in the range of 0.15 to 1.0, and the BET specific surface area is in the range of 0.1 to 13 m²/g. The upper limit of the BET specific surface area is preferably 10 m²/g, more preferably 4 m²/g.

If the content of the calcined organic material exceeds the above-defined range, there can not be sufficiently obtained the effects of lowering the potential and improving the rapid charge/discharge characteristics. In this case, the effect of the acid or alkali treatment, which is preferably conducted at a later stage for further improvement of battery performance, is also poor.

The above-shown compositional range is the value not at the stage of supply of the starting material but at the stage of final preparation. Therefore, when the material is supplied, it is necessary to decide the amount of the material to be supplied in consideration of the compositional ratio at the final stage. The lithium ion secondary battery using the thus prepared "amorphous carbon-coated graphitic carbonaceous material" for the negative electrode has a higher capacity and also shows more excellent rate and cycle characteristics than the battery having its negative electrode composed a non-coated graphite material.

G. Acid solution

The acid solution used for treating the "amorphous carbon-coated graphitic carbonaceous material" in the present invention is not specified; it is possible to use, for instance, the solutions of inorganic acids such as halogenous acids (hydrofluoric acid, hydrochloric acid, bromic acid, iodic acid, etc.), sulfuric acid and nitric acid, organic acids such as trichloroacetic acid, trifluoroacetic acid and oxalic acid, and mixtures of these acids. It is preferred to use an acid solution heated at a temperature not higher than the boiling point of water. The preferred acid solution for use in the present invention is a solution of hydrochloric acid. The preferred range of concentration of the acid solution is not less than 5 N (normal).

## H. Alkaline solution

The alkaline solution used for treating the "amorphous carbon-coated graphitic carbonaceous material" in the present invention is also not specified; it is possible to use, for instance, the solutions of alkali metal hydroxides such as sodium hydroxide and potassium hydroxide, solutions of ammonia, tetraalkylanmonium, urea and the like, and solutions of organic amines such as pyridine, quinoline, quinoxaline and piperidine. It is preferred to use an alkaline solution heated at a temperature not higher than the boiling point of water The preferred alkaline solution for use in the present invention is a solution of an alkali metal hydroxide. The preferred range of concentration of the alkaline solution is not less than 5 N in the case of alkali metal hydroxides.

The method for producing the negative electrode according to the present invention is described below.

The method for producing the negative electrode in the present invention is not subject to specific restrictions as far as the said materials are used; for instance, the following method can be used. Also, in the present invention, in case where such graphitic material is coated with a carbonizable organic substance, then calcined, pulverized and treated with an acid or alkaline solution, even the graphitic material having no specific properties described above can be used preferably as a negative electrode material.

First, by using a mixer having heating means, a graphite material and an organic substance are mixed in such a ratio that the final composition become within the above-defined range, and the mixture is subjected to a deaeration/devolatilization treatment and calcined usually at 400 to 2,000°C for 0.1 to 12 hours, preferably at 700 to 1,500°C for 0.5 to 5 hours. The calcination product is pulverized to obtain an "amorphous carbon-coated graphitic carbonaceous material."

Then this "amorphous carbon-coated graphitic carbonaceous material" is dispersed in an acid or alkaline solution and stirred, shaken or subjected to supersonic treatment at 20 to 150°C for a period of preferably 0.5 hour to one week.

Then the acid or alkaline solution adhered to the particle is washed away with ultra-pure water or distilled water, and the washed particles are dried. The drying temperature is usually 80 to 350°C, preferably 80 to 150°C. There is no need of heating to such a high temperature that may cause a change in the structure of the base carbon material.

The negative electrode material for the lithium ion secondary battery according to the present invention has an amorphous carbon phase on the surface before it is reformed. Therefore, after reformation with an acid or alkaline solution, it only needs to dry the material at a temperature of 80 to 150°C after washing with water, with no high-temperature heat-treatment required.

In a lithium ion secondary battery, the negative electrode comprising the "amorphous carbon-coated graphitic carbonaceous material" subjected to an acid or alkali treatment is capable of providing a higher battery capacity and also shows better rate and cycle characteristics than possible with a negative electrode comprising the non-treated "amorphous carbon-coated graphitic carbonaceous material."

Then, a binder and a solvent are added to the said graphite powder to form a slurry, and this slurry is applied to a metallic collector substrate such as a copper foil and dried to prepare to an electrode. The electrode material may be molded as is into a form of electrode by such method as roll molding or compression molding. The same operation may be applied for molding the positive electrode.

As the said binder, the polymers stable against the solvents are used. Examples of such polymers include resinous polymers such as polyethylene, polypropylene, polyethylene terephthalate, aromatic polyamides and cellulose, rubber-like polymers such as styrene-butadiene rubber, isoprene rubber, butadiene rubber and ethylene-propylene rubber, thermoplastic elastomeric polymers such as styrene-butadiene-styrene block copolymer and its hydrogenation product, styrene-ethylene-butadiene-styrene copolymer, styrene-isoprene-styrene block copolymer and its hydrogenation product, soft resinous polymers such as syndiotactic 1,2-polybutadiene, ethylene-vinyl acetate copolymer and propylene-$\alpha$-olefin ($C_2$-$C_{12}$) copolymer, fluoro-polymers such as polyvinylidene fluoride, polytetrafluoroethylene and polytetrafluoroethylene-ethylene copolymer, and polymer compositions having alkali metal ion, particularly lithium ion conductivity.

The said polymers having ion conductivity include the following systems (i) and (ii):

(i) A system comprising a combination of a polyether-based polymer such as polyethylene oxide or polypropylene oxide, a crosslinked polymer such as polyether compound, or a high- molecular weight compound such as polyepichlorohydrin, polyphosphazene, polysiloxane, polyvinyl pyrrolidone, polyvinylidenecarbonate or polyacrylonitrile, with a lithium salt or a lithium-based alkali metal salt;

(ii) A system comprising a combination of an organic compound having high dielectric constant, such as propylene carbonate, ethylene carbonate or $\gamma$-butyrolactone, with the above system (i).

Ion conductivity of the said ion-conductive polymer compositions at room temperature is usually not less than $10^{-5}$ S/cm, preferably not less than $10^{-3}$ S/cm.

Mixing form of a graphite material ("amorphous carbon-coated graphitic carbonaceous material") and a binder may be various forms; for example, the particles of both materials are mixed; a fibrous binder is mixed with the particles of the graphite material in an entangled state; a layer of the binder adheres to the graphite material particle surfaces.

The mixing percentage of the binder to the graphite material is usually 0.1 to 30% by weight, preferably 0.5 to 10% by weight. When the mixing percentage of the binder to the graphite material exceeds 30% by weight, the produced electrode has high internal resistance, and when the said percentage is less than 0.1% by weight, bindability of the carbonaceous powder to the collector tends to be poor.

The secondary battery of the present invention is here explained.

The secondary battery of the present invention comprises a combination of a negative electrode plate obtained in the manner described above, an electrolyte and a positive electrode plate described below, plus other battery elements such as separator, gaskets, collector, cover plate and cell case.

The shape of the battery is not specified in the present invention; it may be, for instance, cylindrical, square or coin-like. In the present invention, basically, a collector and a negative electrode material are mounted on a cell floor plate, an electrolyte and a separator are placed thereon, the positive electrode is mounted in opposition to the negative electrode, and the assembly is caulked with gaskets and a cover plate to constitute a secondary battery.

The non-aqueous solvents usable for the electrolyte in the present invention include the organic solvents such as propylene carbonate, ethylene carbonate, chloroethylene carbonate, trifluoropropylene carbonate, diethyl carbonate dimethyl carbonate, ethyl methyl carbonate, 1,2-dimethoxyethane, $\gamma$-butyrolactone, tetrahydrofuran, 2-methyltetrahydrofuran, sulphorane and 1,3-dioxorane. These solvents may be used either singly or as a mixture of two or more of them. In the case of non-aqueous solvents described above, an additive capable of forming a coating which enabled efficient charge and discharge of lithium ions on the negative electrode surface may be added in an optional ratio. Examples of such additives include gases such as $CO_2$, $N_2O$, CO and $SO_2$, polysulfide $Sx^{-2}$, vinylene carbonate, catechol carbonate and the like.

The electrolyte is prepared by adding an inorganic or organic lithium salt to a non-aqueous solvent such as mentioned above. The inorganic lithium salts usable for this purpose include $LiClO_4$, $LiPF_6$, $LiBF_4$, $LiAsF_6$, LiCl, LiBr and the like, and the organic lithium salts include $LiCF_3SO_3$, $LiN(SO_2CF_3)_2$, $LiN(SO_2C_2F_5)_2$, $LiC(SO_2CF_3)_3$, $LiN(SO_3CF_3)_2$ and the like.

It is also possible to use the polymeric solid electrolytes which are the conductors of alkali metal ions such as lithium ions.

The positive electrode material is not specified in the present invention, but it is preferred to use the metallic chalcogen compounds which are capable of occluding and releasing the alkali metal cations such as lithium ions during charge and discharge. Examples of such metallic chalcogen compounds include vanadium oxides, vanadium sulfides, molybdenum oxides, molybdenum sulfides, manganese oxides, chromium oxides, titanium oxides, titanium sulfides, and the composites of these oxides and sulfides. Preferred among these compounds are $Cr_3O_8$, $V_2O_5$, $V_5O_{13}$, $VO_2$, $Cr_2O_5$, $MnO_2$, $TiO_2$, $MoV_2O_8$, $TiS_2V_2S_5MoS_2$, $MoS_3VS_2$, $Cr_{0.25}V_{0.75}S_2$, $Cr_{0.5}V_{0.5}S_2$ and the like.

It is also possible to use chalcogen compounds such as $LiMY_2$ (wherein M is a transition metal such as Co or Ni, and Y is O or S), oxides such as $LiM_2Y_4$ (wherein M is Mn, and Y is O), sulfides such as CuS, $Fe_{0.25}V_{0.75}S_2$ and $Na_{0.1}CrS_2$, phosphorus and sulfur compounds such as $NiPS_3$ and $FePS_3$, and selenium compounds such as $VSe_2$ and $NbSe_3$.

The positive electrode is prepared by mixing a compound such as mentioned above with a binder and coating it on a collector as in the case of the negative electrode.

The separator for retaining the electrolyte usually comprises a material having excellent liquid holding property. For instance, a non-woven fabric or a porous film of a polyolefin resin is impregnated with the said electrolyte.

## BEST MODE FOR CARRYING OUT THE INVENTION

The present invention is hereinafter described in further detail by showing the examples thereof, which examples however are merely intended to be illustrative and not to be construed as limiting the scope of the invention.

(1) Evaluation of electrode materials

Particle size determination was made by using a laser diffraction type particle size analyzer. The automatically calculated average particle size was used as standard of evaluation.

The specific surface area was measured according to the BET one-point method.

Raman spectroscopy was conducted by irradiating 5,145 Å argon ion laser light at an intensity of 30 mW using Nippon Bunko NR-1800. The strength of the peak existing in the region of 1,570-1,620 cm$^{-1}$ and the strength of the peak existing in the region of 1,350-1,370 cm$^{-1}$ were measured, and the R value obtained therefrom and the $\Delta \upsilon$ value, which is the half-value width of the peak existing at 1,570-1,620 cm$^{-1}$, were determined.

The charging and discharging capacity of the negative electrode, the rate characteristics against high-speed charge and discharge, and the electro-chemical determinations such as determination of the potential-capacity curve, were conducted in the manner described below.

A coin-type battery was prepared using a negative electrode material molded into a sheet with a binder, a separator, an electrolyte and a lithium metal for the opposite electrode, and it was evaluated by a commercial charge/discharge tester.

The sheet electrode was prepared in the following way. To 5 g of the electrode material, a dimethylacetamide solution of polyvinylidene fluoride (PVdF) was added in an amount of 10 wt% calculated as solids to form a slurry, and this slurry was coated on a copper foil and preliminarily dried at 80°C. A 20 mm-diameter disc was punched from the coated copper foil and dried under reduced pressure at 110°C to prepare an electrode.

A lithium metal electrode was disposed in opposition to the thus obtained electrode, with an electrolyte-impregnated polypropylene-made separator interposed therebetween to prepare a 2016 coin-type cell, and it was subjected to a charge and discharge test. The electrolyte was prepared by dissolving lithium perchlorate in a ratio of 1.0 mol/L into an ethylene carbonate/diethyl carbonate (1:1 by volume) mixed solvent.

In the standard charge/discharge test, doping was carried out until the interpole potential difference became 0 V at a current density of 0.16 mA/cm$^2$, while undoping was conducted until the interpole potential difference became 1.5 V at a current density of 0.33 mA/cm$^2$

In the test of rate characteristics against high-speed charge and discharge, doping was carried out until the interpole potential difference became 0 V at a current density of 0.16 mA/cm$^2$, while undoping was conducted until the interpole potential difference became 1.5 V at a current density of 5.6 mA/cm$^2$.

The capacity was evaluated by conducting the charge/discharge test on each of the three coin-type cell samples, determining the efficiency of the first cycle, which is the ratio of doping capacity to undoping capacity in the first cycle, the doping and undoping capacities in the fourth cycle, and the undoping capacities at 2.8 mA/cm$^2$ and 5.6 mA/cm$^2$, and averaging the determinations.

Examples 1-8

The procured graphite material was screened to obtain the material having an average particle size (measured in the manner described above) of 4 to 40$\mu$m. Then the BET specific surface area of the particles of thus obtained graphite material was measured, and the particles having a specific surface area of not more than 25 m$^2$/g were selected.

Finally, the particles satisfying the conditions of the above-shown formula (I) or (II) in the relation between the BET specific surface area "y" and the particle size "x" were selected and used as the carbonaceoous negative electrode for a lithium ion secondary battery.

The thus obtained battery was subjected to the said standard charge/discharge test. The results are shown in Tables 1 and 2.

Comparative Examples 1-6

The lithium ion secondary batteries were made according the same procedure as defined in Example 1 except that a graphite powder satisfying the conditions of the formula (I) or (II) on the relation between BET specific surface area "y" and particle size "x" was used as electrode material, and these batteries were subjected to the same standard charge/discharge test as conducted in Example 1. The results are shown in Tables 1 and 2.

Example 9

A negative electrode was made in the same way as defined in Example 1 except that the graphite material was calcined in an inert gas atmosphere at 2,000°C, and the same evaluations as defined in Example 1 were conducted. The results are shown in Tables 1 and 2.

Example 10

2.0 kg of the same artificial graphite power as used in Example 8 and 1.0 kg of ethylene heavy end tar (EHE, produced by Mitsubishi Chemical Corporation.), which is a naphtha cracking product, were mixed in a stainless tank having an internal capacity of 20 litres, and the obtained slurry-like mixture was heated to 1,100°C in a batch-type heating oven under an inert atmosphere and maintained in this state for 2 hours. The resulting product was pulverized and passed through a vibrating screen to select the particles having a size of 18 to 22 μm, finally obtaining an "amorphous carbon-coated graphitic carbonaceous material", or a graphitic carbonaceous material having its particle surfaces coated with 7 wt% of amorphous carbon. A lithium ion secondary battery was prepared in the same way as in the preceding Examples except that the said "amorphous carbon-coated graphic carbonaceous material" was used as the negative electrode, and this battery was subjected to the same standard charge/discharge test as conducted in the preceding Examples. The results are shown in Table 3.

Example 11

A negative electrode was prepared in the same way as defined in Example 10 except for use of the artificial graphite used in Example 4. The evaluation results are shown in Table 3.

Comparative Example 7

A negative electrode was prepared in the same way as defined in Example 10 except for use of the artificial graphite used in Comparative Example 3. The evaluation results are shown in Table 3.

Example 12

3.0 kg of an artificial graphite powder and 1.0 kg of ethylene heavy end tart (EHE, produced by Mitsubishi Chemical Corporation), a naphtha cracking product, were mixed, and the obtained slurry-like mixture was devolatilized by heating at 700°C under an inert atmosphere in a batch-type heating oven for one hour, then heated to 1,300°C and maintained in this state for 2 hours. The thus treated mixture was pulverised and passed through a vibrating screen to select the particles having a size of 20 to 25 μm. These particles were fed into 12.5 litres of 5 N hydrochloric acid and stirred for 3 days. Then hydrochloric acid was filtered away and the residual precipitate was washed with pure water. This operation was repeated until pH of the washing water holding the precipitate in a dispersed state returned to neutrality. The obtained precipitate was dried by heating at 120°C and used as the carbonaceous negative electrode for a lithium ion secondary battery, and this battery was subjected to the same standard charge/discharge test as conducted in the preceding Examples. The results are shown in Table 4.

Example 13

A negative electrode was prepared in the same way as defined in Example 12 except for use of 7 N hydrochloric acid. The evaluation results are shown in Table 4.

Example 14

A negative electrode was prepared in the same way as defined in Example 12 except for use of 5 N sodium hydroxide The evaluation results are shown in Table 4.

Example 15

A negative electrode was prepared in the same way as defined in Example 12 except for use of 13 N nitric acid. Tile evaluation results are shown in Table 4.

Example 16

A negative electrode was prepared in the same way as defined in Example 12 except for use of 2.5 N oxalic acid. The evaluation results are shown in Table 4.

Comparative Example 8

A negative electrode was prepared in the same way as defined in Example 12 except that an artificial graphite powder was used as electrode material without giving any treatment thereto. The evaluation results are shown in Table 4.

Comparative Example 9

The same artificial graphite powder as used in Example 2 was supplied into 12.5 litres of 5 N hydrochloric acid and stirred for 3 days, after which hydrochloric acid was filtered away and the residual precipitate was washed with pure water. This operation was repeated until pH of the washing water holding the precipitate in a dispersed state returned to neutrality. The obtained precipitate was dried by heating at 120°C and used as negative electrode material for a lithium ion secondary battery, and this battery was subjected to the same standard charge/discharge test as conducted in the preceding Examples. The results are shown in Table 4.

Comparative Example 10

1.0 kg of the same ethylene heavy end tar as used in Example 12 was heat-treated at 700°C under an inert atmosphere in a batch-type heating oven for one hour for devolatilization, then heated to 1,300°C and maintained in this state for 2 hours, after which this material was pulverized and passed through a vibrating screen to select the particles having a size of 20 to 25 $\mu$m. Then hydrochloric acid was filtered away and the residual precipitate was washed with pure water. This operation was repeated until pH of the washing water holding the precipitate in a dispersed state returned to neutrality. The obtained precipitate was dried by heating at 120°C and used as negative electrode material of a lithium ion secondary battery, and this battery was subjected to the same standard charge/discharge test as conducted in the preceding Examples. The results are shown in Table 4.

Comparative Example 11

The same ethylene heavy end tar as used in Example 12 was devolatilized by heating at 1,300°C under an inert atmosphere in a batch-type heating oven for 2 hours, then pulverized, passed through a vibrating screen to select the particles having a size of 20 to 25 $\mu$m, and used as negative electrode material for a lithium ion secondary battery, and this battery was subjected to the same standard charge/discharge test as conducted in the preceding Examples. The results are shown in Table 4.

Table 1

| | Type of graphite | 1st cycle efficiency (%) | Doping capacity (mAh/g) |
|---|---|---|---|
| Example 1 | Natural graphite | 89 | 365 |
| Example 2 | Natural graphite | 91 | 360 |
| Example 3 | Natural graphite | 90 | 362 |
| Example 4 | Artificial graphite | 91 | 348 |
| Example 5 | Kish graphite | 90 | 364 |
| Example 6 | Artificial graphite | 88 | 334 |
| Example 7 | Natural graphite | 85 | 339 |
| Example 8 | Artificial graphite | 89 | 345 |
| Example 9 | Artificial graphite | 88 | 335 |
| Comparative Example 1 | Natural graphite | 95 | 320 |
| Comparative Example 2 | Natural graphite | 91 | 345 |
| Comparative Example 3 | Artificial graphite | 89 | 301 |
| Comparative Example 4 | Artificial graphite | 91 | 303 |
| Comparative Example 5 | Artificial graphite | 81 | 320 |
| Comparative Example 6 | Artificial graphite | 86 | 282 |
| | Undoping capacity (mAh/g) | Capacity at 2.8 mA/cm$^2$ (mAh/g) | Capacity at 5.6 mA/cm$^2$ (mAh/g) |
| Example 1 | 363 | 362 | 334 |
| Example 2 | 356 | 350 | 313 |
| Example 3 | 360 | 356 | 347 |
| Example 4 | 348 | 341 | 285 |
| Example 5 | 365 | 368 | 364 |
| Example 6 | 349 | 327 | 256 |
| Example 7 | 338 | 321 | 206 |
| Example 8 | 342 | 330 | 269 |
| Example 9 | 345 | 342 | 335 |
| Comparative Example 1 | 320 | 237 | 106 |
| Comparative Example 2 | 342 | 314 | 164 |
| Comparative Example 3 | 299 | 260 | 100 |
| Comparative Example 4 | 301 | 267 | 75 |
| Comparative Example 5 | 317 | 312 | 266 |
| Comparative Example 6 | 280 | 271 | 223 |

Table 2

| | Average particle size (µm) | Specific surface area (m2/g) | R value | Δυ value (cm⁻¹) |
|---|---|---|---|---|
| Example 1 | 17.0 | 6.1 | 0.13 | 17.8 |
| Example 2 | 14.0 | 4.9 | 0.09 | 19.2 |
| Example 3 | 12.2 | 8.8 | 0.05 | 19.1 |
| Example 4 | 24.0 | 5.0 | 0.11 | 20.6 |
| Example 5 | 14.2 | 4.9 | 0.02 | 20.0 |
| Example 6 | 7.9 | 12.9 | 0.16 | 21.1 |
| Example 7 | 6.3 | 16.1 | 0.20 | 21.2 |
| Example 8 | 17.0 | 8.9 | 0.15 | 22.2 |
| Example 9 | 8.0 | 9.8 | 0.05 | 20.3 |
| Comparative Example 1 | 40.7 | 2.4 | 0.08 | 20.3 |
| Comparative Example 2 | 19.7 | 12.1 | 0.23 | 22.6 |
| Comparative Example 3 | 18.0 | 10.3 | 0.29 | 24.6 |
| Comparative Example 4 | 14.0 | 12.8 | 0.41 | 25.9 |
| Comparative Example 5 | 6.7 | 21.1 | 0.28 | 25.5 |
| Comparative Example 6 | 9.1 | 15.6 | 0.34 | 26.5 |

Table 3

| | Example 10 | Example 11 | Comparative Example 7 |
|---|---|---|---|
| Treating solution | None | None | None |
| First cycle efficiency (%) | 92 | 92 | 92 |
| Doping capacity (mAh/g) | 350 | 362 | 315 |
| Undoping capacity (mAh/g) | 348 | 361 | 314 |
| Capacity at 2.8 mA/cm$^2$ (mAh/g) | 334 | 348 | 280 |
| Capacity at 5.6 mA/cm$^2$ (mAh/g) | 300 | 312 | 130 |

Table 4

| | Treating solution | 1st cycle efficiency (%) | Doping capacity (mAh/g) |
|---|---|---|---|
| Example 12 | 5 N hydrochloric acid | 95 | 386 |
| Example 13 | 7 N hydrochloric acid | 94 | 378 |
| Example 14 | 5N NaOH | 93 | 356 |
| Example 15 | 13 N nitric acid | 93 | 356 |
| Example 16 | 2.5 N oxalic acid | 92 | 348 |
| Comparative Example 8 | none | 92 | 352 |
| Comparative Example 9 | 5 N hydrochloric acid | 94 | 354 |
| Comparative Example 10 | 5 N hydrochloric acid | 84 | 222 |
| Comparative Example 11 | none | 88 | 215 |
| | Undoping capacity (mAh/g) | Capacity at 2.8 mA/cm$^2$ (mAh/g) | Capacity at 5.6 mA/cm$^2$ (mAh/g) |
| Example 12 | 384 | 308 | 300 |
| Example 13 | 378 | 379 | 350 |
| Example 14 | 354 | 353 | 326 |
| Example 15 | 354 | 353 | 326 |
| Example 16 | 346 | 338 | 282 |
| Comparative Example 8 | 350 | 336 | 290 |
| Comparative Example 9 | 354 | 298 | 127 |
| Comparative Example 10 | 220 | 206 | 184 |
| Comparative Example 11 | 213 | 200 | 168 |

The foregoing results confirm that the lithium ion secondary batteries according to the present invention (1) can develop a doping capacity close to the theoretical lithium ion occlusion capacity (372 mAh/g) of graphite, (2) shows a high undoping capacity and a high first cycle efficiency, and (3) can maintain a high capacity even during high-speed charge and discharge at 2.8 mA/cm$^2$ and 5.8 mA/cm$^2$. It is also noted that the lithium ion secondary batteries of the present invention according to Examples 12 and 13 have a doping capacity and an undoping capacity which exceed the theoretical lithium ion occlusion capacity of graphite.

**Claims**

1.   A lithium ion secondary battery comprising a positive electrode, a non-aqueous electrolyte, a separator and a negative electrode comprising a carbon material capable of charging and discharging lithium ions, said negative electrode containing at least one type of graphite material which satisfies the following conditions (a) and (b):

(a) when the BET specific surface area of the graphite material is represented by y (m$^2$/g) and the particle size by x (μm), the graphite material satisfies the following formula (I):

$$y \leqq 52x^{-0.6} \quad (4 \leqq x \leqq 40, \ 0.1 \leqq y \leqq 25) \tag{I}$$

(b) in Raman spectroscopic analysis using argon ion laser light with a wavelength of 5,145 Å, the ratio of the strength of the peak existing in the region of 1,350-1,370 cm$^{-1}$ (IB) to the strength of the peak existing in the region of 1,570-1,620 cm$^{-1}$, which is represented by an R value (IB/IA), is 0.001 to 0.2.

2.   A lithium ion secondary battery according to Claim 1, wherein the graphite material satisfies the following formula (II):

$$y \leqq 4dx^{-0.6} \quad (4 \leqq x \leqq 30, \ 0.1 \leqq y \leqq 20) \tag{II}$$

3. A lithium ion secondary battery according to Claim 1, wherein the graphite material satisfies the following condition (c):

(c) in Raman spectroscopic analysis using argon ion laser light with a wavelength of 5,145 Å, the half-value width of the peak existing at 1,570-1,620 cm$^{-1}$, which is represented by a $\Delta\upsilon$ value, is 14 to 22.

4. A lithium ion secondary battery characterized by using as negative electrode an amorphous carbon-coated graphitic carbonaceous material prepared by coating the particle surfaces of a graphite material as defined in any one of Claims 1-3 with a carbonizable organic material, calcining and pulverizing the coated graphite material.

5. A lithium ion secondary battery characterized by using as negative electrode a graphite material prepared by coating the particle surfaces of a graphite material with a carbonizable organic material, calcining and pulverizing tile coated graphite material, and then treating it with an acid or alkaline solution.

6. A lithium ion secondary battery characterized by using as negative electrode a graphite material prepared by coating the particle surfaces of a graphite material as defined in any one of Claims 1-3 with a carbonizable organic material, calcining and pulverizing the coated graphite material, and further treating it with an acid or alkaline solution.

7. A lithium ion secondary battery according to Claim 5 or 6, wherein the acid solution is a solution of at least one acid selected from the group consisting of fluoric acid, hydrochloric acid, bromic acid, iodic acid, sulfuric acid, nitric acid, acetic acid, trichloroacetic acid, trifluoroacetic acid and oxalic acid.

8. A lithium ion secondary battery according to Claim 5 or 6, wherein the alkaline solution is a solution containing at least one compound selected from the group consisting of alkali metal hydroxides, ammonia, tetraalkylammonium, urea, pyridine, quinoline, quinoxaline and piperidine.

## INTERNATIONAL SEARCH REPORT

| | International application No. |
|---|---|
| | PCT/JP98/00442 |

A. CLASSIFICATION OF SUBJECT MATTER
Int.Cl⁶ H01M4/58, H01M4/02, H01M10/40, C01B31/04

According to International Patent Classification (IPC) or to both national classification and IPC

B. FIELDS SEARCHED

Minimum documentation searched (classification system followed by classification symbols)
Int.Cl⁶ H01M4/58, H01M4/02, H01M10/40, C01B31/04

Documentation searched other than minimum documentation to the extent that such documents are included in the fields searched
Jitsuyo Shinan Koho       1926–1996   Toroku Jitsuyo Shinan Koho   1994–1998
Kokai Jitsuyo Shinan Koho   1971–1998   Jitsuyo Shinan Toroku Koho   1996–1998

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P, Y | JP, 10-3922, A (Nippon Carbon Co., Ltd.), January 6, 1998 (06. 01. 98), Claims 1 to 3 ; column 4, lines 7 to 38 (Family: none) | 1–3 |
| Y | JP, 7-235294, A (Matsushita Electric Industrial Co., Ltd.), September 5, 1995 (05. 09. 95), Claims 1, 2 ; column 5, line 17 to column 6, line 48 ; Fig. 9 (Family: none) | 1–3 |
| Y A | JP, 5-94838, A (Mitsubishi Petrochemical Co., Ltd.), April 16, 1993 (16. 04. 93), Claim 1 ; column 4, lines 32 to 47 ; column 5, line 33 to column 7, line 4 (Family: none) | 1–4 5–8 |
| A | JP, 8-339805, A (Mitsubishi Petrochemical Co., Ltd.), December 24, 1996 (24. 12. 96), Table 1 (Family: none) | 1–8 |

| ☒ | Further documents are listed in the continuation of Box C. | ☐ | See patent family annex. |
|---|---|---|---|

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| April 28, 1998 (28. 04. 98) | May 12, 1998 (12. 05. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)

15

## INTERNATIONAL SEARCH REPORT

International application No.

PCT/JP98/00442

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP, 8-339798, A (Nisshinbo Industries, Inc.),<br>December 24, 1996 (24. 12. 96),<br>Claims 1 to 8, 18 ; column 4, line 2 to column 6,<br>line 10  (Family: none) | 4<br>5-8 |
| Y<br>A | JP, 6-20690, A (Toray Industries, Inc.),<br>January 28, 1994 (28. 01. 94),<br>Claims 1 to 7 ; column 2, line 18 to column 3,<br>line 9  (Family: none) | 4<br>5-8 |
| Y<br>A | JP, 5-217604, A (Mitsubishi Petrochemical<br>Co., Ltd.),<br>August 27, 1993 (27. 08. 93),<br>Column 3, lines 11 to 34 ; column 8, line 2 to column<br>9, line 30  (Family: none) | 4<br>5-8 |

Form PCT/ISA/210 (continuation of second sheet) (July 1992)